# EUROPEAN PATENT APPLICATION

(11) **EP 3 361 424 A1**
(43) Date of publication of application: **15.08.2018**
(21) Application number: 17155981.8
(22) Date of filing: 14.02.2017
(51) Int. Cl.: G06Q 10/00, G05B 19/00, G06Q 10/06

(54) **ESTIMATING OPERATIONAL LIFE EXPECTANCY OF AN INDUSTRIAL DEVICE**

(71) Applicant: ABB Technology Oy, 00380 Helsinki (FI)
(72) Inventor: Hu, Zhongliang, 00380 Helsinki (FI); Kohvakka, Mikko, 00380 Helsinki (FI); Tanila, Teemu, 00380 Helsinki (FI)
(74) Representative: Kolster Oy Ab

(57) **Abstract**

A computerized method is disclosed for estimating operational life expectancy of an industrial device. The method comprises obtaining, in a user mobile device, sensor data on the operational environment of the industrial device, wherein the sensor data is measured by the user mobile device in the proximity of the industrial device. The user mobile device receives from the industrial device via a local communications connection, load data on the usage of the industrial device, the load data being recorded in the industrial device. The load data and sensor data is transmitted from the user mobile device via a communications network to a remote computing device which compares a theoretical operational life expectancy of the industrial device or industrial device component with the load data and sensor data, and calculates an instantaneous operational life expectancy of the industrial device or industrial device component, based on the comparison.

## Description

### FIELD OF THE INVENTION

The invention relates to a communications system, and particularly to estimating operational life expectancy of an industrial device.

### BACKGROUND

The following background description art may include insights, discoveries, understandings or disclosures, or associations together with disclosures not known to the relevant art prior to the present invention but provided by the present disclosure. Some such contributions disclosed herein may be specifically pointed out below, whereas other such contributions encompassed by the present disclosure the invention will be apparent from their context.

The operational life of a frequency converter may be estimated in the frequency converter by means of counters and timers which calculate, for example, load cycles or thermal cycles. By statistical analysis of field failures, it is possible to define a failure probability. Replacement of specific electrical parts is recommended when the failure probability exceeds a certain predefined value. Because the frequency converter may have limited sensing capabilities, only some of the factors affecting the operational life may be measured, and thus the failure probability estimation accuracy is not optimal.

### SUMMARY

The following presents a simplified summary of features disclosed herein to provide a basic understanding of some exemplary aspects of the invention. This summary is not an extensive overview of the invention. It is not intended to identify key/critical elements of the invention or to delineate the scope of the invention. Its sole purpose is to present some concepts disclosed herein in a simplified form as a prelude to a more detailed description.

According to an aspect, there is provided the subject matter of the independent claims. Embodiments are defined in the dependent claims.

One or more examples of implementations are set forth in more detail in the accompanying drawings and the description below. Other features will be apparent from the description and drawings, and from the claims.

### BRIEF DESCRIPTION OF THE DRAWINGS

In the following the invention will be described in greater detail by means of preferred embodiments with reference to the attached drawings, in which
Figure 1 shows a simplified architecture of a system according to an exemplary embodiment;
Figure 2 illustrates exemplary information exchange;
Figure 3 illustrates a usage profile of a drive;
Figure 4 illustrates operational life expectancy estimation of a drive;
Figures 5 to 7 are flow charts illustrating exemplary functionalities;
Figure 8 and 9 are block diagrams of exemplary apparatuses.

### DETAILED DESCRIPTION OF SOME EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

The operational life expectancy of a frequency converter may be affected by the design and load (voltage, current) of electrical components, operation time, load cycles, thermal cycles, operation temperature, humidity, concentration of gases, dirt etc. The remaining lifetime is currently estimated in the frequency converter by means self-diagnostics. However, the failure probability is widely distributed, and component change may be recommended in the system too early, wherein a significant part of a component's lifetime remains unused.

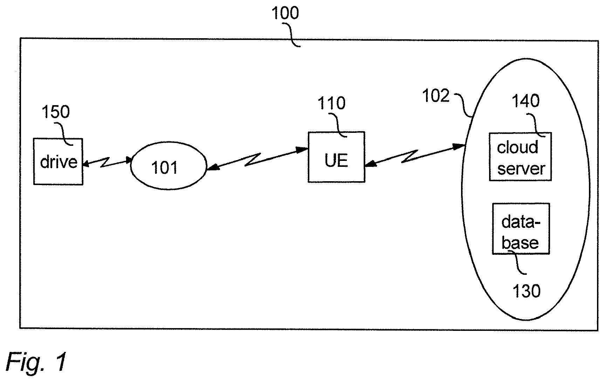

An extremely general architecture of an exemplary system 100 is illustrated in Figure 1. Figure 1 is a simplified system architecture only showing some elements, functional entities, which are logical units whose implementation may differ from what is shown, and some equipment. It is apparent to a person skilled in the art that the system comprises any number of shown elements, other equipment, other functions and structures that are not illustrated.

In the embodiment illustrated in Figure 1, the system 100 comprises one or more local connection networks 101 (only one illustrated in Figure 1). The local connection network may use a so-called short range wireless technology, for example Bluetooth, Wi-Fi, ZigBee and/or Li-Fi, without restricting the technology providing connections to them. The local connection network may be a point-to-point network, star network, tree network, mesh network, piconet, or scatternet in an industrial site, for example.

In the illustrated example the local connection network 101 comprises a user apparatus (UE) 110 of a user. The user apparatus 110 refers to a portable computing device (equipment), and it may also be referred to as a user terminal, user device, or mobile terminal. Such computing devices (apparatuses) include wireless mobile communication devices operating with or without a subscriber identification module (SIM) in hardware or in software, including, but not limited to, the following types of devices: mobile phone, smart-phone, personal digital assistant (PDA), laptop and/or touch screen computer, tablet (tablet computer), multimedia device and wearable computer (wearable device). The user apparatus 110 may have at least two communications interfaces, e.g. two antennas, one to connect to a remote computing device 140 wirelessly over one or more networks 102 and at least one to connect to a drive 150 over an ad-hoc connection (local connection). For ad-hoc connections requiring pairing the user apparatus 110 may comprise a pairing unit (not shown in Figure 1). It should be appreciated that in the user apparatus 110 the number of reception and/or transmission antennas, or other communication interfaces, may naturally vary according to a current implementation.

At the simplest, an ad-hoc connection requires in addition to the user apparatus 110 in the local connection network 101 one counterpart device with which to establish the ad-hoc connection, the counterpart device being any kind of a device configured to implement a pairing related functionality. In the illustrated example of Figure 1, the local connection network 101 may be configured to support a "trust network". The trust may be created by using key-based encryption communication, such as public key infrastructure or shared secret infrastructure, for example. The drive 150 may comprise an access unit (not shown in Figure 1) configured to provide access to the user apparatus.

The remote computing device 140 may herein refer to a server computer 140 which may be any computing device performing server operations, such as cloud server or a physical server computer. The remote computing device 140 may be comprised in the network 102, such as a cellular network, wireless network, local network, or a cloud network. Thus, the remote computing device 140 may be connected via internet access, cellular network and/or local area network (fixed or wireless) to one or more of the devices 110 and 130.

The database server 130 refers herein to a combination of data storage (database) and a data management system. The data storage may be any kind of conventional or future data repository, including distributed and centralized storing of data, a cloud-based storage in a cloud environment, managed by any suitable management system. The implementation of the data storage, the manner how data is stored, retrieved and updated are irrelevant to the invention, and therefore not described in detail here. Further, it should be appreciated that the location of the database server 130 is irrelevant to the embodiment. The database server 130 may locate in a remote service center, or in the same location where the drive 15 is, for example.

The one or more networks 102 (communications networks) providing information exchange at least between the user apparatus 110 and the cloud server 140, may comprise one or more wireless networks, wherein a wireless network may be based on any mobile system, such as GSM, GPRS, LTE, 4G, 5G and beyond, or a wireless local area network, such as Wi-Fi. Further, the one or more networks 102 may comprise one or more fixed networks and the internet.

The local connection network 101 in the illustrated example of Figure 1 may be used by the user apparatus 110 for remote maintenance purposes, to adjust or acquire parameters from the drive 150, for example, in which case the drive 150 represents an industrial device whose operations and/or service and/or maintenance may be taken care locally or remotely via one or more communication interfaces and/or modules that may be integral parts of a drive and/or external to the drive. Other examples of such industrial devices include frequency converters, AC/DC modules, DC/AC modules, programmable logic controllers, switches, motion controllers or motion drives, servo motors, soft starters, robots, cars, and heavy equipment, etc., just to list only some examples. In other words, the user apparatus (UE) 110 of a user may represent visiting equipment, and the drive 150 represents permanent equipment. The permanent equipment means herein equipment that is intended to locate in the industrial site a long time, whereas the visiting equipment means equipment that is intended to visit the industrial site temporarily. However, it should be appreciated that the user apparatus 110 may be permanent equipment as well, or the local connection network may comprise devices that each are visiting equipment.

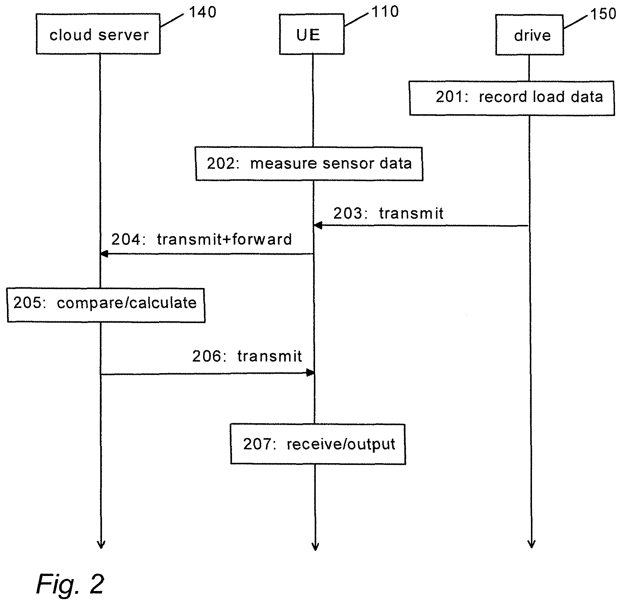

An industrial device's operational life expectancy estimation procedure is illustrated in Figure 2. In the example it is assumed that a Bluetooth connection may be established between a user apparatus 110 and one or more drives 150, without restricting the examples to such a connection. Although not illustrated in the example, depending on the selected estimation procedure, the procedure may contain additional steps. However, they are not illustrated herein. For example, instead of transmitting the load data and sensor data together to the remote computing device 140, separate transmissions of the load data and sensor data may be used.

Referring to Figure 2, load data on the usage of the drive 150 may be recorded in the drive 150 in step 201. This recording may be continuously and automatically carried out in the drive whenever the drive is in use. In step 202, the user apparatus 110 (user mobile device) may enter the proximity of the drive 150, wherein the drive 150 may be automatically detected in the user apparatus 110. Further in step 202, the user apparatus 110 is able to obtain sensor data on the operational environment of the drive. The sensor data may be measured by the user apparatus 110 when user apparatus 110 is in the proximity of the drive. Radio signal strength may be used in the user apparatus 110 to estimate the proximity of the drive. Alternatively any other sensor that is able to measure the proximity of the drive may be used in the user apparatus 110 (within the sensing range of the corresponding sensor of the user apparatus 110).

The load data recorded in the drive 150 may be transmitted in a message 203 to the user apparatus 110 from the drive 150 via a local communications connection 101. The user apparatus 110 receives the message 203 from the drive 150 via the local communications connection. The user apparatus 110 transmits said load data and said sensor data via a communications network 102 to the remote computing device 140 (such as the cloud server 140).

The remote computing device 140 receives in step 205 from the user apparatus 110 said load data and said sensor data via the communications network 102. The remote computing device 140 compares in step 205 a theoretical operational life expectancy of the drive 150 or a drive component with said load data and said sensor data. The theoretical operational life expectancy of the drive 150 or drive component may be requested and received (not shown in Figure 2) by the remote computing device 140 from the database server 130. Alternatively, the theoretical operational life expectancy of the drive 150 or drive component may be requested and received (not shown in Figure 2) by the remote computing device 140 from the drive 150 via the user apparatus 110. The remote computing device 140 calculates in step 205 an instantaneous operational life expectancy of the drive 150 or drive component, based on the comparison. A drive component as used herein may refer to any relevant mechanical or electrical component of the drive 150. The theoretical operational life expectancy of the drive 150 or drive component may have been defined e.g. by the manufacturer of the drive 150 or drive component.

The remote computing device 140 generates in step 205 a service recommendation for the drive 150 based on the calculation. The remote computing device 140 transmits in step 206 via the communications network 102 said service recommendation to the user apparatus 110. The user apparatus 110 receives and outputs in step 207 said service recommendation. For example, the user apparatus 110 may display on a screen said service recommendation to the user.

In an embodiment, the remote computing device 140 generates 205 and transmits 206, via the communications network to the user apparatus 110, the service recommendation for the drive 150 when the instantaneous operational life expectancy of the drive 150 or the drive component is shorter than a predefined threshold value.

In an embodiment, the user apparatus 110 outputs 207 the service recommendation for the drive 150 when the instantaneous operational life expectancy of the drive 150 or the drive component is shorter than a predefined threshold value (such as a number of usage hours or days).

In an embodiment, the sensor data comprises information on at least one of ambient temperature, ambient humidity, concentration of dirt in ambient air, and concentration of gases in ambient air, measured by the user apparatus 110 in the proximity of the drive 150.

In an embodiment, the sensor data comprises at least one of location sensor data, magnetic field sensor data, audio sensor data, ultrasonic audio data and vibration sensor data, measured by the user apparatus 110 in the proximity of the drive 150. For example, an early indication of a component failure may be detected by sensing ultrasonic audio emissions.

In an embodiment, the load data comprises information on at least one of operational time, voltage, current, load cycles, and thermal cycles, regarding the drive 150 or the drive component.

In an embodiment, the local communications connection 101 is a Bluetooth connection.

In an embodiment, the communications network 102 is a mobile communications network or a wireless local area network.

An embodiment discloses refining the drive lifetime estimation by performing contextual (local) measurements in a user mobile device 110. This may be referred to as local diagnostics. The user mobile device 110 may equipped with one or more sensors, for example, an audio sensor, acceleration (vibration) sensor, temperature sensor, magnetic field sensor, and/or location sensor, etc. The sensor in the user mobile device 110 enables obtaining and providing meaningful information on the operation environment of the frequency converter 150.

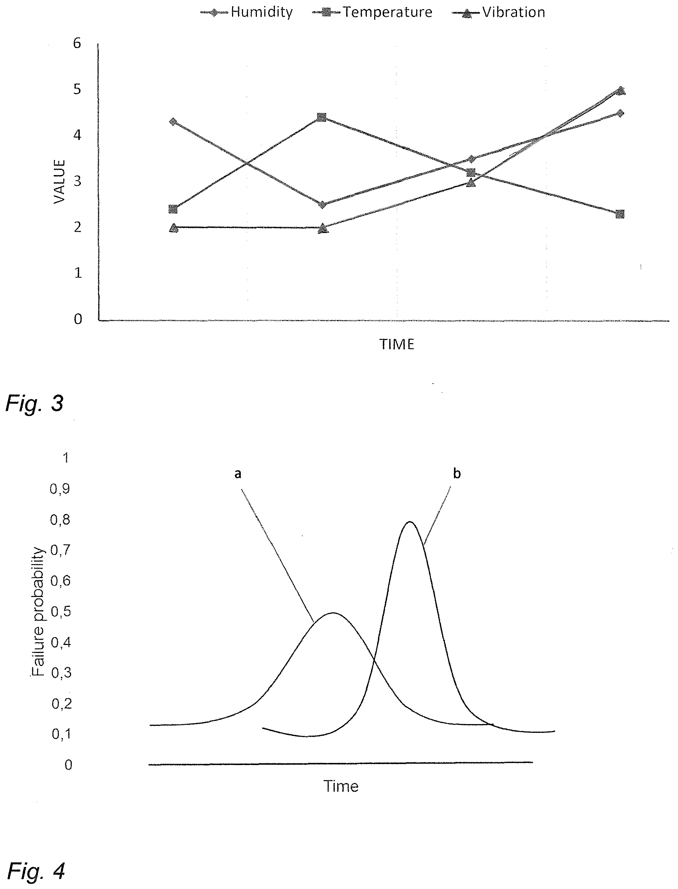

By combining the above information sources, it is possible to calculate a more accurate estimation on the remaining lifetime of electrical (or mechanical) components of the drive 150 and in many cases extend the maintenance interval (i.e. service interval) of the drive 150 without sacrificing the reliability of the component. Figure 4 illustrates non-optimal lifetime expectancy estimation (curve a) and optimal lifetime expectancy estimation (curve b). Figure 4 illustrates the failure probability as a function of time, in the case of original (non-optimal) lifetime expectancy estimation, and refined (optimal) lifetime expectancy estimation.

An embodiment involves collecting the local diagnostics information when possible, i.e. when the user mobile device 110 is used near the frequency converter 150. The data collection may be carried out automatically such that the frequency converter 150 is configured to detect the proximity of the user mobile device 110. The user mobile device 110 may connect to the frequency converter 150 e.g. via a Bluetooth connection 101. The user mobile device 110 may also output information to a user to request the user e.g. to place the user mobile device 110 on top of the frequency converter 150 to perform more accurate sensing of the frequency converter 150 operational conditions. The local diagnostics data may be transmitted and stored with a time stamp to the cloud server 140. By combining several local diagnostics data points the user mobile device 110 and/or the cloud server 140 is able to define curves that represent the usage profile of the frequency converter 150 (see Figure 3).

In an embodiment, the collected local diagnostics data is sent 204 from the user mobile device 110 to the cloud server 140 for performing the statistical analysis, and for generating 205 and sending service recommendations (remote diagnostics) in the system 100. The generated service recommendation may be sent 206 from the cloud server 140 to the mobile phone 110.

An embodiment provides a cloud server algorithm that enables improving the accuracy and creditability of the default lifetime expectancy estimation of the frequency converter 150, and adjusting the default lifetime expectancy value for the frequency converter 150, based on the collected usage data and contextual data.

In an embodiment, the measurement of the sensor data in the user mobile device is triggered when the user mobile device detects that it is in the proximity of the drive.

In an embodiment, the transmission of the sensor data and/or load data from the user mobile device to the cloud server is triggered when the user mobile device obtains such data. Alternatively, the sensor data and/or load data is transmitted from the user mobile device to the cloud server periodically, e.g. at predetermined time intervals.

In an embodiment, the transmission of the load data from the drive to the user mobile device is triggered when the user mobile device is in the proximity of the drive or connects to the drive (via connection 101). If the user mobile device is in the proximity of the drive for a long time, the load data may be transmitted from the drive to the user mobile device periodically, e.g. at predetermined time intervals.

In an embodiment, step 205 (comparing data, calculating operational life expectancy and/or generating service recommendation) may be performed in the user mobile device instead the cloud server.

In an embodiment, the transmission 206 of the service recommendation to the user mobile device also includes transmission of the instantaneous operational life expectancy of the drive or the drive component. In that case, the user apparatus may be configured to output the instantaneous operational life expectancy of the drive or the drive component to the user.

In an embodiment, no service recommendation needs to be generated 205 and/or transmitted 206 if the instantaneous operational life expectancy of the drive or the drive component exceeds a predefined threshold value.

In an embodiment, the service recommendation is generated 205 and transmitted 206 even though the instantaneous operational life expectancy of the drive or the drive component exceeds a predefined threshold value. In that case, the user apparatus may be configured to decide whether or not to output the service recommendation and/or the instantaneous operational life expectancy of the drive or the drive component.

In an embodiment, instantaneous operational life expectancy of the drive or the drive component may be estimated and transmitted to the user apparatus. The user apparatus may be configured to output the operational life expectancy of the drive or the drive component. For example, the user apparatus may be configured to output a summary of a component's lifetime expectancy.

For example, a company X may own a factory which employs a small group of drives for the production line. Company X has been satisfied with the quality of the drives, and they have chosen reliable drives, because they cannot afford to have long down time of the assembly line. Still, however, they have had to buy new drives only after a few years, since the operation environment of their drives in company X's factory is challenging, including, for example, very frequent load cycles, a high operational temperature, a relatively dirty process, etc. To monitor the situation of their drives, an employee routinely checks the condition of each drive personally to make sure everything is working well. But even in this case, the drives may need to be replaced by new ones much earlier than the expiry of the expected operational life of the drives, just to assure reliability. This is costly for company X. But still they cannot risk the down time of the drives and/or the factory. Therefore, they are looking for a solution to more accurately find out the "real" lifetime expectancy of the drives, i.e. the operational life expectancy of the drives in the specific operating environment/conditions prevailing at company X's factory.

A mobile phone application involves a lifetime calculator which may be used in connection with company X's drives routinely. The employee is thereby able to approach a drive and then run a diagnose program in the mobile phone application. The application automatically generates and outputs a much more accurate estimation on the remaining lifetime of the drive. This is enabled by the mobile phone using various sensors, for example, audio/microphone, acceleration (vibration) sensor, temperature sensor, magnetic field sensor, to obtain contextual data which may be combined with other contextual data, e.g. location/GPS data. These data may be used to provide meaningful information on the operational environment of the drive. By combining the above information and the drive's own diagnosis procedures, a much more accurate estimation on the remaining lifetime of the key electrical components of the drive may be generated, as well as a much more accurate estimation on the overall lifetime of the drive. This information may be collected from the mobile phone, but it may also be collected at the factory/company level, since the collected information is synchronized and analysed in the cloud server. This makes planning/deciding of drive upgrades/renewals easier.

The analysis is based on correlating and comparing theoretical operational life expectancy (given by a manufacturer) of the drive, with operational life expectancy calculated based on the sensor data, thus enabling defining actual operational life expectancy for the drive.

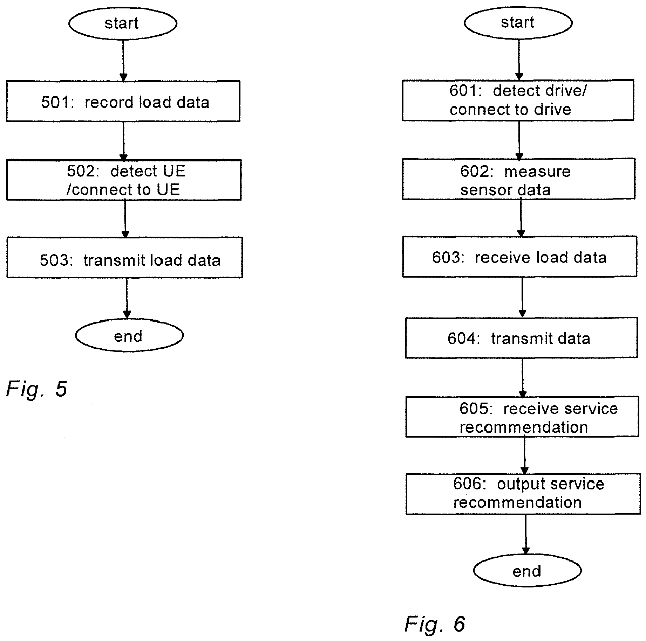

Figures 5 to 7 are flow charts illustrating exemplary embodiments. Referring to Figure 5, load data on the usage of the drive 150 is recorded in the drive 150 in step 501. This recording may be continuously and automatically carried out in the drive whenever the drive is in use. In step 502, the user apparatus 110 (user mobile device) may enter the proximity of the drive 150, wherein the drive 150 may automatically detect the user apparatus 110. Further in step 502, the drive 150 may automatically connect to the user apparatus 110. The load data recorded in the drive 150 may be transmitted 503 in a message to the user apparatus 110 from the drive 150 via a local communications connection 101.

Referring to Figure 6, in step 601, the user apparatus 110 (user mobile device) may enter the proximity of the drive 150, wherein the drive 150 may be automatically detected in the user apparatus 110/the user apparatus may connect to the drive. In step 602, the user apparatus 110 is able to obtain sensor data on the operational environment of the drive. The sensor data may be measured by the user apparatus 110 when user apparatus 110 is in the proximity of the drive. Radio signal strength may be used in the user apparatus 110 to estimate the proximity of the drive. Alternatively any other sensor that is able to measure the proximity of the drive may be used in the user apparatus 110 (within the sensing range of the corresponding sensor of the user apparatus 110). Load data recorded in the drive 150 may be received 603 in a message in the user apparatus 110 from the drive 150 via a local communications connection 101. The user apparatus 110 transmits 604 said load data and said sensor data via a communications network 102 to the remote computing device 140 (such as the cloud server 140). The user apparatus 110 receives in step 605 via the communications network 102 a service recommendation for the drive from the remote computing device 140. The user apparatus 110 outputs in step 606 said service recommendation. For example, the user apparatus 110 may display on a screen said service recommendation to the user. In an embodiment, the user apparatus 110 outputs 606 the service recommendation for the drive 150 when the instantaneous operational life expectancy of the drive 150 or the drive component is shorter than a predefined threshold value (such as a number of usage hours or days).

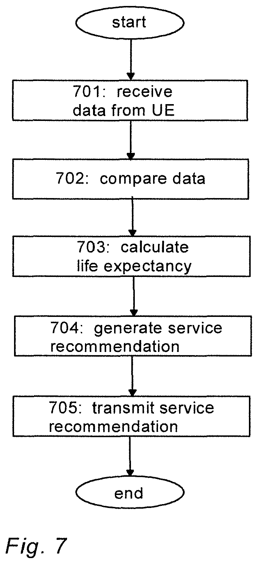

Referring to Figure 7, the remote computing device 140 (such as the cloud server 140) receives in step 701 from the user apparatus 110 load data and sensor data via the communications network 102. The remote computing device 140 compares in step 702 a theoretical operational life expectancy of the drive 150 or a drive component with said load data and said sensor data. The theoretical operational life expectancy of the drive 150 or drive component may be requested and received (not shown in Figure 7) by the remote computing device 140 from the database server 130. Alternatively, the theoretical operational life expectancy of the drive 150 or drive component may be requested and received (not shown in Figure 7) by the remote computing device 140 from the drive 150 via the user apparatus 110. The remote computing device 140 calculates in step 703 an instantaneous operational life expectancy of the drive 150 or drive component, based on the comparison. A drive component as used herein may refer to any relevant mechanical or electrical component of the drive 150. The theoretical operational life expectancy of the drive 150 or drive component may have been defined e.g. by the manufacturer of the drive 150 or drive component. The remote computing device 140 generates in step 704 a service recommendation for the drive 150 based on the calculation. The remote computing device 140 transmits in step 705 via the communications network 102 said service recommendation to the user apparatus 110. In an embodiment, the remote computing device 140 generates 205 and transmits 705, via the communications network to the user apparatus 110, the service recommendation for the drive 150 when the instantaneous operational life expectancy of the drive 150 or the drive component is shorter than a predefined threshold value.

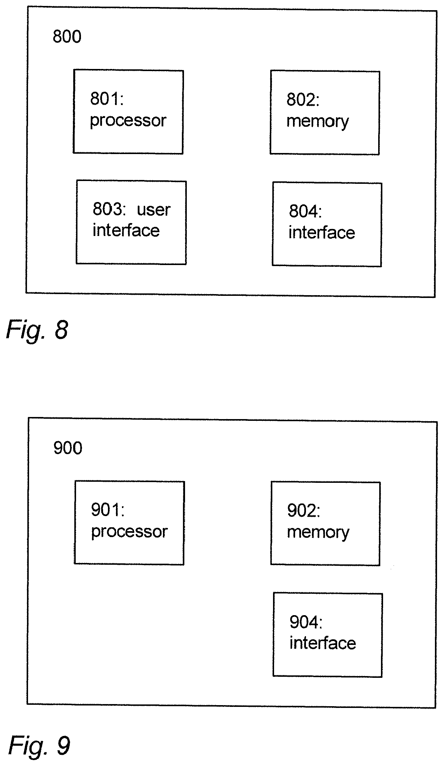

Figure 8 provides an apparatus 800 according to some embodiments of the invention. Figure 8 illustrates an apparatus configured to carry out the functions described above in connection with at least one of Figures 1-7 The apparatus 800 comprises at least one processor 801 and at least one memory 802 including a computer program code, wherein the at least one memory 802 and the computer program code are configured, with the at least one processor 801, to cause the apparatus 800 to carry out the procedures of the above-described industrial device or user mobile device. Figure 8 illustrates a block diagram of a structure of such a device. The at least one processor 801, the at least one memory 802, and the computer program code may thus be considered as an embodiment of means for executing the above-described procedures of the industrial device or user mobile device. The apparatus 800 may be comprised in the industrial device or user mobile device, e.g. the apparatus 800 may form a chipset or a circuitry in the industrial device or user mobile device. In some embodiments, the apparatus is the industrial device or user mobile device. The apparatus 800 comprises a processing circuitry comprising the at least one processor 801. The processing circuitry may comprise an interface 804 configured to obtain sensor data on the operational environment of an industrial device, the sensor data being measured by the user mobile device in the proximity of the industrial device. The interface 804 may be configured to receive from the drive via a local communications connection, load data on the usage of the industrial device, and transmit said load data and said sensor data via a communications network to a remote computing device. The apparatus 800 may comprise a user interface 803 configured to output a service recommendation received from the remote computing device and calculated based on comparing a theoretical operational life expectancy of the industrial device or an industrial device component with said load data and said sensor data..

Figure 9 provides an apparatus 900 according to some embodiments of the invention. Figure 9 illustrates an apparatus configured to carry out the functions described above in connection with at least one of Figures 1-7 The apparatus comprises at least one processor 901 and at least one memory 902 including a computer program code, wherein the at least one memory 902 and the computer program code are configured, with the at least one processor 901, to cause the apparatus 900 to carry out the procedures of the above-described remote computing device. Figure 9 illustrates a block diagram of a structure of such a device. The at least one processor 901, the at least one memory 902, and the computer program code may thus be considered as an embodiment of means for executing the above-described procedures of the remote computing device. The apparatus 900 may be comprised in the remote computing device, e.g. the apparatus 900 may form a chipset or a circuitry in the remote computing device. In some embodiments, the apparatus 900 is the remote computing device. The apparatus 900 comprises a processing circuitry comprising the at least one processor 901. The processing circuitry may comprise an interface 903 configured to receive, from a user mobile device via a communications network, load data on the usage of an industrial device and sensor data on the operational environment of the industrial device. The processor 901 may be configured to compare a theoretical operational life expectancy of the industrial device or an industrial device component with said load data and said sensor data, and calculate an instantaneous operational life expectancy of the industrial device or the industrial device component, based on the comparison.

The processing circuitry may comprise the circuitries as sub-circuitries, or they may be considered as computer program modules executed by the same physical processing circuitry. The memory 802, 902 may store one or more computer program products comprising program instructions that specify the operation of the circuitries. The memory 802, 902 may further store a database comprising theoretical operational life expectancy data, for example. The apparatus 800, 900 may further comprise an interface 804, 903 (transmitter/receiver) providing the apparatus 800, 900 with communication capability with network nodes/devices.

As used herein, the term 'circuitry' refers to all of the following: (a) hardware-only circuit implementations such as implementations in only analog and/or digital circuitry; (b) combinations of circuits and software and/or firmware, such as (as applicable): (i) a combination of processor(s) or processor cores; or (ii) portions of processor(s)/software including digital signal processor(s), software, and at least one memory that work together to cause an apparatus to perform specific functions; and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used herein, the term "circuitry" would also cover an implementation of merely a processor (or multiple processors) or portion of a processor, e.g. one core of a multi-core processor, and its (or their) accompanying software and/or firmware. The term "circuitry" would also cover, for example and if applicable to the particular element, a baseband integrated circuit, an application-specific integrated circuit (ASIC), and/or a field-programmable grid array (FPGA) circuit for the apparatus according to an embodiment of the invention.

The processes or methods described above in connection with Figures 1 to 9 may also be carried out in the form of one or more computer process defined by one or more computer programs. The computer program shall be considered to encompass also a module of a computer programs, e.g. the above-described processes may be carried out as a program module of a larger algorithm or a computer process. The computer program(s) may be in source code form, object code form, or in some intermediate form, and it may be stored in a carrier, which may be any entity or device capable of carrying the program. Such carriers include transitory and/or non-transitory computer media, e.g. a record medium, computer memory, read-only memory, electrical carrier signal, telecommunications signal, and software distribution package. Depending on the processing power needed, the computer program may be executed in a single electronic digital processing unit or it may be distributed amongst a number of processing units.

The present invention is applicable to wireless, cellular or mobile communication systems defined above but also to other suitable communication systems. The protocols used, the specifications of cellular communication systems, their network elements, and terminal devices develop rapidly. Such development may require extra changes to the described embodiments. Therefore, all words and expressions should be interpreted broadly and they are intended to illustrate, not to restrict, the embodiment.

It will be obvious to a person skilled in the art that, as the technology advances, the inventive concept can be implemented in various ways. The invention and its embodiments are not limited to the examples described above but may vary within the scope of the claims.

## Claims

1. A computerized method for estimating operational life expectancy of an industrial device, the method comprising
obtaining, in a user mobile device, sensor data on the operational environment of the industrial device, the sensor data being measured by the user mobile device in the proximity of the industrial device;
receiving, in the user mobile device from the industrial device via a local communications connection, load data on the usage of the industrial device, the load data being recorded in the industrial device;
transmitting said load data and said sensor data from the user mobile device via a communications network to a remote computing device;
comparing, in the remote computing device, a theoretical operational life expectancy of the industrial device or an industrial device component with said load data and said sensor data;
calculating, in the remote computing device, an instantaneous operational life expectancy of the industrial device or the industrial device component, based on the comparison.

2. A method according to claim 1, comprising
generating, in the remote computing device, a service recommendation for the industrial device based on the calculation;
transmitting from the remote computing device via the communications network said service recommendation to the user mobile device;
receiving and outputting said service recommendation in the user mobile device.

3. A method according to claim 1 or 2, wherein
the sensor data comprises information on at least one of ambient temperature, ambient humidity, concentration of dirt in ambient air, and concentration of gases in ambient air;
the sensor data comprises at least one of location sensor data, magnetic field sensor data, audio sensor data, and vibration sensor data, measured by the user mobile device in the proximity of the industrial device; and/or
the load data comprises information on at least one of operational time, voltage, current, load cycles, thermal cycles, regarding the industrial device or the industrial device component.

4. A method according to claim 1, 2 or 3, comprising
generating and transmitting, from the remote computing device via the communications network to the user mobile device, a service recommendation for the industrial device when the instantaneous operational life expectancy of the industrial device or the industrial device component is shorter than a predefined threshold value.

5. A method according to any of the preceding claims, wherein
the local communications connection is a Bluetooth connection; and/or
the communications network is a mobile communications network or a wireless local area network.

6. A communications system comprising a user mobile device and a remote computing device, wherein the user mobile device is configured to
obtain sensor data on the operational environment of an industrial device, the sensor data being measured by the user mobile device in the proximity of the industrial device;
receive from the industrial device via a local communications connection, load data on the usage of the industrial device, the load data being recorded in the industrial device; and
transmit said load data and said sensor data via a communications network to the remote computing device;
wherein the remote computing device is configured to
compare a theoretical operational life expectancy of the industrial device or an industrial device component with said load data and said sensor data; and
calculate an instantaneous operational life expectancy of the industrial device or the industrial device component, based on the comparison.

7. A system according to claim 6, wherein the system comprises means for performing any of the method steps of claims 2 to 5.

8. A user mobile device configured to
obtain sensor data on the operational environment of an industrial device, the sensor data being measured by the user mobile device in the proximity of the industrial device;
receive from the drive via a local communications connection, load data on the usage of the industrial device, the load data being recorded in the industrial device;
transmit said load data and said sensor data via a communications network to a remote computing device;
output a service recommendation received from the remote computing device, wherein the service recommendation is calculated in the remote computing device based on comparing a theoretical operational life expectancy of the industrial device or an industrial device component with said load data and said sensor data.

9. A user mobile device according to claim 8, wherein
the sensor data comprises information on at least one of ambient temperature, ambient humidity, concentration of dirt in ambient air, and concentration of gases in ambient air;
the sensor data comprises at least one of location sensor data, magnetic field sensor data, audio sensor data, and vibration sensor data, measured by the user mobile device in the proximity of the industrial device; and/or
the load data comprises information on at least one of operational time, voltage, current, load cycles, thermal cycles, regarding the industrial device or the industrial device component.

10. A user mobile device according to claim 8 or 9, wherein it is configured to output
the service recommendation for the industrial device when an instantaneous operational life expectancy of the industrial device or the industrial device component is shorter than a predefined threshold value,
the service recommendation for the industrial device and the operational life expectancy of the industrial device or the industrial device component when an instantaneous operational life expectancy of the industrial device or the industrial device component is shorter than a predefined threshold value, or
the operational life expectancy of the industrial device or the industrial device component.

11. A user mobile device according to claim 8,9 or 10, wherein
the local communications connection is a Bluetooth connection; and/or
the communications network is a mobile communications network or a wireless local area network.

12. A server apparatus configured to
receive, from a user mobile device via a communications network, load data on the usage of an industrial device and sensor data on the operational environment of the industrial device, the sensor data being measured by the user mobile device in the proximity of the industrial device, and the load data being recorded in the industrial device;
compare a theoretical operational life expectancy of the industrial device or an industrial device component with said load data and said sensor data;
calculate an instantaneous operational life expectancy of the industrial device or the industrial device component, based on the comparison.

13. An apparatus according to claim 12, wherein it is configured to
generate a service recommendation for the industrial device based on the calculation;
transmit via the communications network said service recommendation to the user mobile device;

14. An apparatus according to claim 12 or 13, wherein
the sensor data comprises information on at least one of ambient temperature, ambient humidity, concentration of dirt in ambient air, and concentration of gases in ambient air;
the sensor data comprises at least one of location sensor data, magnetic field sensor data, audio sensor data, ultrasonic audio data, and vibration sensor data, measured by the user mobile device in the proximity of the industrial device; and/or
the load data comprises information on at least one of operational time, voltage, current, load cycles, thermal cycles, regarding the industrial device or the industrial device component.

15. An apparatus according to claim 12, 13 or 14, wherein it is configured to
generate and transmit via the communications network to the user mobile device, a service recommendation for the industrial device when the instantaneous operational life expectancy of the industrial device or the industrial device component is shorter than a predefined threshold value.

16. A computer program product comprising program instructions which, when run on a computing apparatus, causes the computing apparatus to perform a method as claimed in any of claims 1 to 5.
